# NEUE EUROPÄISCHE PATENTSCHRIFT

(11) **EP 1 965 946 B2**
(45) Veröffentlichungstag und Bekanntmachung des Hinweises auf die Entscheidung über den Einspruch: **15.07.2020**
(45) Hinweis auf die Patenterteilung: 02.08.2017
(21) Anmeldenummer: 06830733.9
(22) Anmeldetag: 20.12.2006
(51) Int. Cl.: B23K 35/36

(54) **VERFAHREN ZUR HERSTELLUNG EINES FLUSSMITTELS**
METHOD OF PRODUCTION OF A FLUX
PROCÉDÉ DE FABRICATION D'UN FLUX

(30) Priorität: 22.12.2005 DE 102005062087
(43) Veröffentlichungstag der Anmeldung: 10.09.2008
(73) Patentinhaber: Albemarle Germany GmbH, 65926 Frankfurt am Main (DE)
(72) Erfinder: HARMS, Dr. Gerd J., 38640 Goslar (DE); HOFMANN, Dr. Hartmut, 65779 Kelkheim (DE); LEHMANN, Klaus-Peter, 38685 Langelsheim (DE); SCHIEDT, Alexander, 38729 Hahausen (DE)
(74) Vertreter: Rottmayer, Hans
(86) Internationale Anmeldenummer: PCT/EP2006/069957
(87) Internationale Veröffentlichungsnummer: WO 2007/074117

(56) Entgegenhaltungen:
- EP-A- 0 785 045
- DE-A1- 10 057 180
- GB-A- 2 241 513
- US-A- 4 923 530
- US-A- 5 171 377
- US-A1- 4 689 092
- US-A1- 4 923 530
- "Standard test method for Assignment of the Glass Transition Temperatures", Differential Scanning Calorimetry E1356-08, 2014, pages 1-4,
- "EU-Sicherheitsdatenblatt - CsAIF-Complex", Chemetall, 16 January 2003 (2003-01-16), pages 1-5,
- "Cesium Tetrafluoro Aluminate Complex 50:50 industrial", Chemetall, June 2007 (2007-06), June 2007 (2007-06), pages 1-2,
- BENTRUP U. et al.: "Polymorphism of CsAIF4. Synthesis and structure of two new crystalline forms", European Journal of Solid State Inorganic Chemistry, vol. 29, 1992, pages 371-381, XP055496823,
- "chapter 12" In: SAYLOR ACADEMY: "General Chemistry-Principles, Patterns, and Applications", 2011 pages 1-5; 1068-1073,
- GARCIA J. et al.: "Brazeability of Aluminum Alloys Containing Magnesium by CAB Process Using Cesium Flux", , 14 May 2001 (2001-05-14),
- CHEN R. et al.: "A study on the phase diagram of AIF3-CsF system", Thermochimica Acta, vol. 303, no. 2, 1997, pages 145-150,

## Beschreibung

Gegenstand der vorliegenden Erfindung ist ein Verfahren zur Herstellung eines Flussmittels auf der Basis eines amorphen Cäsiumaluminiumfluorid-Komplexes.

Es ist bekannt, Cäsiumfluoroaluminate als Flussmittel zum Löten von Aluminiumwerkstoffen einzusetzen. Der niedrige Schmelzpunkt und damit die Fähigkeit, auch magnesiumhaltige Aluminiumlegierungen zu löten, machen viele Anwendungen und Entwicklungen erst möglich. In der Automobilindustrie beispielsweise ging die Entwicklung in den letzten Jahren hin zu immer kleineren Kühlern, die mit immer höheren Drücken betrieben werden. Dadurch stiegen die Anforderungen an die Festigkeit der Kühler, was sich in einem höheren Gehalt an Magnesium in den Aluminiumlegierungen niederschlug. Diese Entwicklung bedingte auch höhere Anforderungen an die Flussmittel. Um diesen Anforderungen gerecht werden, muss es möglich sein, ein Flussmittel speziell auf den Anwendungsfall maßzuschneidern. Eine entscheidende Anforderung ist dabei, den Schmelzpunkt eines Flussmittels über einen weiten Bereich einstellen zu können und vor allem auch einen niedrigen Schmelzpunkt bzw. Schmelzbeginn unter 440°C zu ermöglichen. Dabei soll das Flussmittel stabil sein, beispielsweise gegen Oxidation, und sich zu Pasten und Lötstäben verarbeiten lassen.

Stand der Technik sind Flussmittel aus kristallinen Komplexen aus Cäsium / Aluminium / Fluor (Cs/Al/F), so genannte Cäsiumfluoroaluminate. Ein Nachteil dieser kristallinen Stoffe für den Einsatz als Flussmittel ist, dass diese definierte Verbindungen mit engen Schmelzbereichen oder gar genauen Schmelzpunkten sind. Außerdem können zusätzliche Stoffe, beispielsweise Additive, mit denen die Basizität oder Acidität eingestellt werden kann und die das Lötverhalten positiv beeinflussen, nicht an den kristallinen Komplex gebunden werden.

US-A-4689092 beschreibt ein Flussmittel, das aus einem Cäsiumfluoroaluminat-Komplex besteht, welcher bei entsprechendem Verhältnis von Cäsiumfluorid (CsF) zu Aluminiumfluorid (AlF₃) bei 440°C zu schmelzen beginnt. Das Material zeigt starke Kristallinität im Röntgendiffraktogramm und ist nicht hygroskopisch. Das Material lässt sich technisch einfach hydrothermal aus Cäsiumfluorid und Aluminiumfluorid herstellen. Es können jedoch keine Schmelzpunkte unter 440°C erreicht werden, sondern nur Schmelzpunkte im Bereich von 440 bis 460°C eingestellt werden. Des Weiteren zeigt das Flussmittel keine guten Eigenschaften bei der Lötung von Werkstoffen, deren Magnesiumgehalt größer als 1% ist. Außerdem ist dieses Flussmittel wegen seiner leichten Oxidierbarkeit und seinem schnellen Abbau zum Flammenlöten nicht geeignet (US-A-5171377).

US-A-4923530 beschreibt die Herstellung einer sauerstoffhaltigen Suspension aus Cäsiumfluoroaluminat, die eine gute Stabilität und einen niedrigen Schmelzpunkt von 414°C hat. Zur Herstellung wird jedoch Flusssäure bei Temperaturen bis 90°C eingesetzt. Der Umgang mit der hochtoxischen Flusssäure unter diesen Bedingungen erfordert besondere Anforderungen an Werkstoffe und Arbeitssicherheit. Durch den Einsatz von Cäsiumcarbonat (Cs₂CO₃) entsteht bei der Reaktion CO₂, welches flusssäure- und fluoridhaltige Aerosole bildet. Außerdem zielt dieses Verfahren auf die Herstellung einer Suspension. Diese eignet sich jedoch nicht zur Herstellung von Lötstäben oder wasserfreien Pasten. Dazu wird ein trockenes Pulver benötigt.

US-A-5171377 beschreibt die Herstellung eines Flussmittels aus Cäsiumfluorid, Aluminiumfluorid und kristallinem Aluminiumhydroxid oder Aluminiumoxid. Der gebildete Komplex lässt einen weiten Schmelzbereich zu und ist zum Löten von magnesiumhaltigen Aluminiumlegierungen geeignet. Es kann jedoch kein Schmelzbeginn unter 440°C erreicht werden. Durch den Einsatz von Aluminiumhydroxid oder Aluminiumoxid als Additive kann keine Acidität im Flussmittel erreicht werden. Die Acidität des Flussmittels wirkt der Oxidation des Flussmittels entgegen.

EP-A-0785045 beschreibt die Herstellung eines Flussmittels, das aus einem Cäsiumfluoroaluminat-Reaktionsprodukt mit unterschiedlichen Verhältnissen von CsF zu AlF₃ besteht. Mit diesem Flussmittel können je nach Verhältnis von CsF zu AlF₃ Schmelzpunkte unterhalb von 440°C bis hinunter zu 427°C erreicht werden. Das Flussmittel weist aber eindeutige Schmelzpunkte auf, was zeigt, dass es sich um einen kristallinen Stoff handelt.

Die aus dem Stand der Technik bekannten Flussmittel entsprechen somit nicht den eingangs beschriebenen Anforderungen. Insbesondere beschreibt der Stand der Technik keine amorphen Cäsiumfluoroaluminate als Flussmittel.

Aufgabe der vorliegenden Erfindung ist es daher, ein Flussmittel auf der Grundlage eines Cäsiumfluoroaluminates bereitzustellen, das als trockenes Pulver gewonnen werden kann, bei dem ein Schmelzbeginn unterhalb von 440°C eingestellt, die Lage und vor allem die Breite des Schmelzbereichs variiert und dessen Acidität bzw. Basizität durch Additive eingestellt werden kann. Unter Schmelzbeginn ist dabei das untere Ende des Schmelzbereiches zu verstehen. Unter Schmelzbereich ist der Temperaturbereich zu verstehen, der vom ersten Anschmelzen bis zur völligen Verflüssigung des Stoffes reicht.

Erfindungsgemäß wird dieses Problem überraschenderweise durch ein Verfahren gemäß den Ansprüchen 1 bis 11 zur Herstellung eines Flussmittels auf der Basis eines amorphen Cäsiumaluminiumfluorid-Komplexes gelöst. Dabei wird ein Cäsiumaluminiumfluorid-Komplex, kurz CsAlF-Komplex, bereitgestellt, der über einen größeren Temperaturbereich aufschmilzt, d.h. einen breiten Schmelzbereich hat. Dies ist möglich, weil der Komplex amorph ist, d.h. nicht kristallin ist. Bei amorphen Festkörpern sind die molekularen Bausteine nicht in Kristallgittern, sondern regellos angeordnet. Dadurch haben amorphe Festkörper keinen scharfen Schmelzpunkt, sondern einen mehr oder minder weiten Schmelzbereich.

Eine Elementaranalyse des amorphen CsAlF-Komplexes ergibt im Wesentlichen folgende Zusammensetzung (in Gew.-%):

| | |
|---|---|
| Cs: | 45-65 |
| Al: | 5-15 |
| F: | 20-40 |

Es ist bekannt, dass Aluminiumfluorid mit Metallfluoriden, beispielsweise Cäsiumfluorid, Komplexsalze bildet. Diese Komplexsalze sind aus AlF₆-Oktaedern aufgebaut. Diese Oktaeder gruppieren sich je nach Größe und Anzahl der vorhandenen Metallionen zu unterschiedlichen Packungen. Dabei entstehen die Kristalle der Verbindungen: CsAlF₄, Cs₂AlF₅, Cs₃AlF₆. Diese zeigen dann die typischen Eigenschaften kristalliner Verbindungen.

Durch geschickte Reaktionsführung wird erfindungsgemäß verhindert, dass es zu dieser Aggregierung und Verbindungsbildung kommt, so dass ein amorpher Cäsiumaluminiumfluorid-Komplex entsteht.

Dazu hat sich als geeigneter Reaktor ein an sich bekannter Vakuummischtrockner erwiesen. In diesem ist die Durchführung mehrerer Verfahrensschritte nacheinander möglich; vorteilhafterweise werden alle Verfahrensschritte des Herstellverfahrens in einem Vakuummischtrockner durchgeführt. Als Ausgangsstoffe werden eine Cäsiumfluoridlösung und Aluminiumfluorid eingesetzt. Nachfolgend ist die Durchführung der Verfahrensschritte beispielhaft beschrieben, ohne die Erfindung dadurch einzuschränken:

### Verfahrensschritt 1:

In Wasser gelöstes Cäsiumfluorid wird an das als Feststoff vorliegende Aluminiumfluorid gebunden. Dabei können während der Reaktion durch Zugabe von Additiven die Produkteigenschaften gesteuert werden. Wie sich gezeigt hat, lassen sich durch den Zusatz alkalischer bzw. saurer Verbindungen:
1. die Reaktionszeit steuern,
2. die Amorphizität des Produkts einstellen,
3. die Farbe des Produkts von rotbraun bis hellweiß verändern,
4. die Eigenschaften des Produkts bei der Pastenherstellung vorgeben,
5. die Eignung für unterschiedliche Lötprozesse erreichen.

Die Temperatur beträgt zwischen 95 und 175°C, bevorzugt zwischen 105 und 150°C. Der Druck beträgt zwischen 0,4 und 2,5 bar absolut, bevorzugt zwischen 0,9 und 2,0 bar absolut. Die Reaktionszeit beträgt zwischen 15 Minuten und 6 Stunden, bevorzugt zwischen 30 Minuten und 5 Stunden.

Die Edukte CsF und AlF₃ werden im molaren Verhältnis von CsF zu AlF₃ zwischen 0,9 : 1 und 3,0 : 1 eingesetzt, bevorzugt im molaren Verhältnis zwischen 1 : 1 und 1,5 : 1. Um die Reaktion zu lenken, können Additive, wie CsHCO₃, Cs₂CO₃, CsOH, verdünnte Flusssäure oder Cäsiumbifluorid eingesetzt werden, bevorzugt verdünnte Flusssäure oder CsOH. Diese Stoffe können einzeln oder als Gemisch eingesetzt werden. Die eingesetzte Menge Additiv wird auf das eingesetzte AlF₃ bezogen. Das molare Verhältnis von Additiv zu AlF₃ beträgt zwischen 0,001 : 1 und 0,2 : 1, bevorzugt zwischen 0,008 : 1 und 0,1 : 1.

### Verfahrensschritt 2:

Gegen Ende der Reaktionszeit des Verfahrensschrittes 1 kann durch Zugabe von sauren bzw. alkalischen Verbindungen die gewünschte Basizität bzw. Acidität im Endprodukt eingestellt werden. Dazu werden die oben aufgeführten Additive CsHCO₃, Cs₂CO₃, CsOH, verdünnte Flusssäure oder Cäsiumbifluorid eingesetzt, bevorzugt verdünnte Flusssäure oder CsOH. Die eingesetzte Menge Additiv wird auf das eingesetzte AlF₃ bezogen. Das molare Verhältnis von Additiv zu AlF₃ beträgt zwischen 0,0001 : 1 und 0,3 : 1, bevorzugt zwischen 0,01 : 1 und 0,11 : 1. Die Bereiche von Temperatur und Druck entsprechen denen von Verfahrensschritt 1.

### Verfahrensschritt 3:

Nach Beendigung der Reaktion im Verfahrensschritt 2 wird durch Anlegen von starkem Vakuum sehr schnell das im Reaktor vorhandene Wasser verdampft, um einerseits die Amorphizität des Produktes weitestgehend zu erhalten, andererseits zu verhindern, dass sich unerwünschte Nebenprodukte bilden. Dabei geht die Reaktionssuspension in einen Feststoff über. Der Druck wird auf Werte zwischen 10 und 100 mbar, bevorzugt zwischen 20 und 40 mbar absolut erniedrigt. Die Zeit, in der das Wasser verdampft wird, um den Feststoff zu erhalten, beträgt zwischen 5 Minuten und einer Stunde, bevorzugt zwischen 15 und 30 Minuten.

### Verfahrensschritt 4:

Wenn der Feststoff vorliegt, wird bei erhöhten Temperaturen und niedrigerem Vakuum das Produkt so weit wie gewünscht entwässert. Es ist damit möglich, Restfeuchten von unter 0,1% zu erreichen. Die Temperatur beträgt dazu zwischen 80 und 300°C, bevorzugt zwischen 100 und 180°C. Der Druck beträgt dazu zwischen 10 und 900 mbar sein, bevorzugt zwischen 20 und 100 mbar. Dadurch werden eventuell gebildete kristalline Hydrate, die die Amorphizität des Produktes verringern, wieder zerstört.

Das erfindungsgemäße Herstellverfahren bietet gegenüber dem Stand der Technik deutliche Vorteile, zum einen bezüglich der Möglichkeiten, die Produkteigenschaften einzustellen, zum anderen hinsichtlich der Arbeitssicherheit und der Anlagenkosten, bevorzugt wenn das Verfahren in nur einem Reaktor, besonders bevorzugt nur in einem Vakuummischtrockner durchgeführt wird.

Das erfindungsgemäße Verfahren erlaubt es, einen amorphen CsAlF-Komplex herzustellen. Dieser Komplex enthält röntgendiffraktometrisch nachweisbar nur Spuren von kristallinem CsAlF₄ oder Cs₂AlF₅xH₂O. Das Edukt CsF kann im Produkt nicht nachgewiesen werden, AlF₃ nur in geringen Mengen.

Der Schmelzbereich des Komplexes lässt sich erfindungsgemäß durch Reaktionsführung und Variation des Verhältnisses von CsF zu AlF₃ einstellen. Es kann ein Schmelzbeginn unterhalb von 420°C eingestellt werden. Das Produkt ist hygroskopisch und nimmt langsam Feuchtigkeit aus der Luft auf.

Diese Vorteile gegenüber dem Stand der Technik erlauben es, den CsAlF-Komplex vielfältig einzusetzen. Wegen der Vielzahl unterschiedlicher Lötanwendungen ist es nötig, entsprechend den einzelnen Lötprozessen spezifische geeignete Flussmittel zur Verfügung zu stellen. Mit der vorliegenden Erfindung ist es möglich, eine breite Vielfalt an Produkten herzustellen.

Die eventuell störende Hygroskopizität der Komplexe kann gegebenenfalls durch Maßnahmen bei der Verarbeitung ausgeglichen werden: Beispielsweise kann:
1. bei der Herstellung von Fülldrähten das Flussmittel durch das Lot von der Umgebung abgeschirmt werden;
2. durch Aufpressen des Flussmittels eine geringe Oberfläche erreicht und damit die Feuchtigkeitsaufnahme verringert werden,
3. mit Hilfe von organischen Flüssigkeiten zur Herstellung von Suspensionen die Feuchtigkeitsaufnahme unterbunden werden.

Gegenstand der Erfindung ist im Einzelnen:
- ein Verfahren zur Herstellung eines Flussmittels gemäß den Ansprüchen 1 bis 11 auf der Basis eines amorphen CsAlF-Komplexes, das durch folgende Verfahrensschritte gekennzeichnet ist:
   a) Bindung des in Wasser gelösten Cäsiumfluorid an das als Feststoff vorliegende Aluminiumfluorid und Einstellen der gewünschten Amorphizität durch Zugabe von sauren bzw. alkalischen Verbindungen als Additive,
   b) Einstellen der gewünschten Basizität bzw. Acidität im Endprodukt durch Zugabe von sauren bzw. alkalischen Verbindungen als Additive,
   c) Anlegen von starkem Vakuum nach Beendigung der Reaktion, um sehr schnell das im Reaktor vorhandene Wasser zu verdampfen,
   d) Entwässerung des Produktes bei erhöhten Temperaturen und niedrigerem Vakuum.

Die Erfindung wird nachstehend durch mehrere Ausführungsbeispiele näher erläutert, ohne sie darauf einzuschränken:

### Beispiel 1: CsAlF-Komplex mit engem Schmelzbereich

Verfahrensschritt a: In einem Vakuummischtrockner mit Brüdenkondensator und Vakuumanlage werden 81 kg einer wässrigen 71,4 %igen Cäsiumfluoridlösung vorgelegt und 21 kg AlF₃ zugegeben. Es wird unter Normalbedingungen gerührt, bis eine homogene Suspension entsteht. Dann werden der Suspension 50 kg 0,2 %ige Flusssäure als Additiv zugegeben. Es wird unter Rühren bei Normaldruck bis zum Sieden erhitzt und 4,5 Stunden unter Rückfluss gekocht.

Verfahrensschritt b: Der kochenden Suspension werden 5 kg einer 0,1 %igen Cäsiumhydroxidlösung als Additiv zugesetzt. Aus der Suspension werden innerhalb von einer Stunde 80 kg Wasser abgedampft. Der Brüden wird kondensiert und das Volumen zur Bestimmung des Endpunkts der Eindampfung benutzt.

Verfahrensschritt c: Es wird Vakuum angelegt. Innerhalb von 5 Minuten wird ein Restdruck von 200 mbar erreicht. Das verbleibende Wasser dampft sehr schnell ab. Nach 30 Minuten wird aus dem Brei ein rieselfähiges Pulver. Der Restdruck beträgt am Ende 35 mbar.

Verfahrensschritt d: Dann wird unter Rühren und maximalem Vakuum getrocknet. Dabei wird eine Produkttemperatur von 160°C erreicht. Der Trockenvorgang wird nach 12 Stunden beendet und das Pulver auf 30°C abgekühlt und abgezogen.

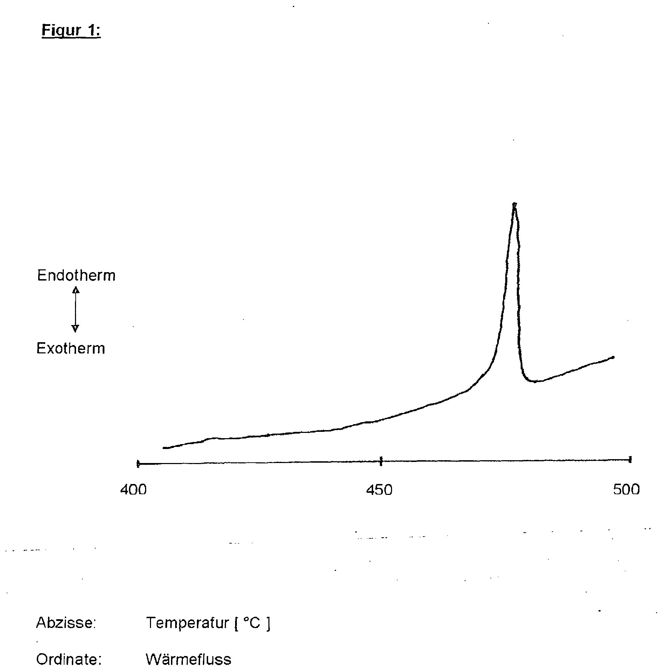

Der erhaltene CsAlF-Complex hat einen pH-Wert von 6,9, eine Restfeuchte von 0,8% und ein Schmelzintervall: Onset = 474°C, End = 478°C. Figur 1: DSC (differential scanning calometry).

### Beispiel 2: CsAlF-Complex mit weitem Schmelzbereich

Verfahrensschritt a: In einem Vakuummischtrockner mit Planetenrührwerk, Brüdenkondensator und Vakuumanlage werden 76 kg einer wässrigen 75,9 %igen Cäsiumfluoridlösung vorgelegt und 22 kg AlF₃ zugegeben. Es wird unter Normalbedingungen gerührt, bis eine homogene Suspension entsteht. Dann werden der Suspension 0,9 kg Cäsiumcarbonat als Additiv zugegeben. Es wird unter Rühren bei Normaldruck bis zum Sieden erhitzt und eine Stunde unter Rückfluss gekocht.

Verfahrensschritt b: Der kochenden Suspension werden 5 kg 0,1%ige Flusssäure zugesetzt. Die Suspension wird unter Normaldruck bis zum Sieden erhitzt.

Verfahrensschritt c: Es wird Vakuum angelegt. Der Druck fällt kontinuierlich bis auf 50 mbar. Nach einer Stunde ist soviel Wasser abgedampft, dass ein trockenes Pulver vorliegt. Der Restdruck beträgt zum Ende 20 mbar.

Verfahrensschritt d: Dann wird unter Rühren und maximalem Vakuum weiter getrocknet. Dabei wird eine Produkttemperatur von 180°C erreicht. Der Trockenvorgang wird nach 8 Stunden beendet und das Pulver auf 40°C abgekühlt und abgezogen.

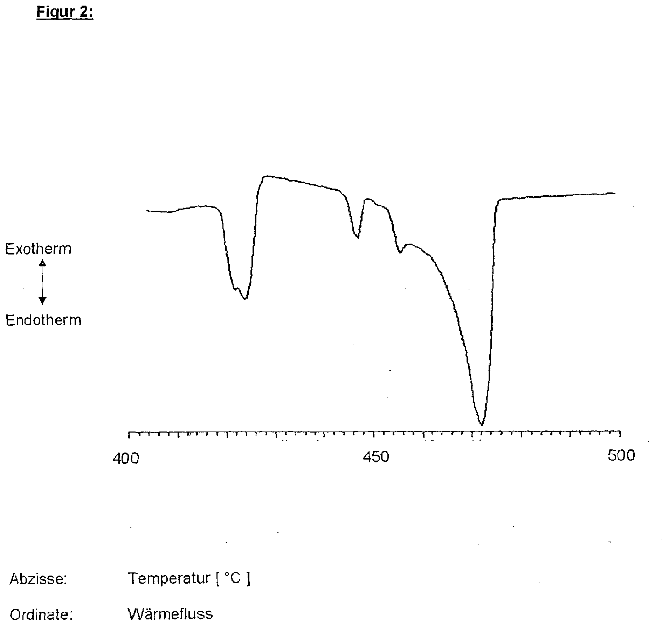

Der erhaltene CsAlF-Komplex hat einen pH-Wert von 6,6, eine Restfeuchte von 0,1 % und ein Schmelzintervall mit mehreren Peaks von 419 bis 472°C; Figur 2: DSC.

## Patentansprüche

1. Verfahren zur Herstellung eines Flussmittels auf der Grundlage eines amorphen CsAlF-Komplexes mit einem Schmelzbereich des Komplexes zwischen 415 bis 480°C, das durch folgende Verfahrensschritte gekennzeichnet ist:
a) Bindung des in Wasser gelösten Cäsiumfluorids an das als Feststoff vorliegende Aluminiumfluorid und Einstellen der Amorphizität durch Zugabe von sauren bzw. alkalischen Verbindungen als Additive, dass während Verfahrensschritt a) die Reaktionszeit zwischen 15 Minuten und 6 Stunden beträgt;
b) Einstellen der Basizität bzw. Acidität im Endprodukt durch Zugabe von sauren bzw. alkalischen Verbindungen als Additive, dass während der Verfahrensschritte a) und b) die Temperatur zwischen 95 und 175°C und der Druck zwischen 0,4 und 2,5 bar absolut beträgt, wobei während Verfahrensschritt a) und/oder b) die Additive CsHCO₃, Cs₂CO₃, CsOH. verdünnte Flusssäure oder Cäsiumbifluorid eingesetzt werden und das molare Verhältnis von Additiv zu AlF₃ zwischen 0,0001 : 1 und 0.3 : 1, betragt;
c) Anlegen von 10 und 100 mbar Vakuum nach Beendigung der Reaktion, um zwischen 5 Minuten und einer Stunde das im Reaktor vorhandene Wasser zu verdampfen, dass während Verfahrensschritt c) die Reaktionssuspension in einen Feststoff übergeht;
d) Entwässerung des Produktes bei Temperaturen zwischen 80 und 300°C und 10 und 900 mbar Vakuum, dass während Verfahrensschritt d) Restfeuchten von unter 0,1% erreicht werden,
woibei das Verfahren ausschließlich in einem Vakuummischtrockner durchgegführt wird.

2. Verfahren nach Anspruch 1, **dadurch gekennzeichnet, dass** während der Verfahrensschritte a) und b) die Temperatur zwischen 105 und 150°C beträgt.

3. Verfahren nach Anspruch 1 oder 2, **dadurch gekennzeichnet, dass** während der Verfahrensschritt a) und b) der Druck zwischen 0,9 und 2,0 bar absolut beträgt.

4. Verfahren nach einem der Ansprüche 1 bis 3, **dadurch gekennzeichnet, dass** während Verfahrensschritt a) die Reaktionszeit zwischen 30 Minuten und 5 Stunden beträgt.

5. Verfahren nach mindestens einem der Ansprüche 1 bis 4, **dadurch gekennzeichnet, dass** während Verfahrensschritt a) und/oder b) die Additive verdünnte Flusssäure oder CsOH, eingesetzt werden

6. Verfahren nach mindestens einem der Ansprüche 1 bis 5, **dadurch gekennzeichnet, dass** das molare Verhältnis von Additiv zu AlF3 zwischen 0,008 : 1 und 0,11 : 1 beträgt.

7. Verfahren nach mindestens einem der Ansprüche 1bis 6, **dadurch gekennzeichnet, dass** während Verfahrensschritt c) der Druck auf Werte zwischen 20 und 40 mbar absolut erniedrigt wird.

8. Verfahren nach mindestens einem der Ansprüche 1 bis 7, **dadurch gekennzeichnet, dass** während Verfahrensschritt c) die Zeit, in der das Wasser verdampft wird, um den Feststoff zu erhalten, zwischen 15 und 30 Minuten beträgt.

9. Verfahren nach mindestens einem der Ansprüche 1 bis 8, **dadurch gekennzeichnet, dass** während Verfahrensschritt d) die Temperatur zwischen 100 und 180°C beträgt.

10. Verfahren nach mindestens einem der Ansprüche 1bis 9, **dadurch gekennzeichnet, dass** während Verfahrensschritt d) der Druck zwischen 20 und 100 mbar beträgt.

11. Verfahren nach mindestens einem der Ansprüche 1 bis 10, **dadurch gekennzeichnet, dass** während Verfahrensschritt d) anstelle von Vakuum Schleppgas zum Abtransport der Feuchtigkeit eingesetzt werden kann. das Verfahren ausschließlich in ein und demselben Reaktor, bevorzugt in einem Vakuummischtrockner durchgeführt wird.

## Claims

1. A process for producing a fluxing agent based on an amorphous CsAlF complex with a melting range of the complex between 415 to 480°C, **characterized by** the following process steps
a) Binding the cesium fluoride dissolved in water to the aluminum fluoride present as a solid and adjusting the amorphicity by addition of acidic or alkaline compounds as additives, such that during process step a) the reaction time is between 15 minutes and 6 hours;
b) Adjusting the basicity or acidity in the end product by addition of acidic or alkaline compounds as additives, so that during process steps a) and b) the temperature is between 95 and 175°C and the pressure is between 0.4 and 2.5 bar absolute, wherein during process step a) and/or b) the additives CsHCO₃, Cs₂CO₃, CsOH, dilute hydrofluoric acid or cesium difluoride are added and the molar ratio of additive to AlF₃ is between 0.0001:1 and 0.3:1;
c) Applying between 10 and 100 mbar vacuum after the end of the reaction to evaporate the water present in the reactor between 5 minutes and one hour, so that the reaction suspension changes into a solid during process step c);
d) Dewatering the product at temperatures between 80 and 300°C and 10 and 900 mbar vacuum, so that residual moisture contents of less than 0.1% are reached during process step d) wherein the process is performed exclusively in a vacuum mixing dryer.

2. The process according to claim 1, **characterized in that** during process steps a) and b) the temperature is between 105 and 150°C.

3. The process according to claim 1 or 2, **characterized in that** during process steps a) and b) the pressure is between 0.9 and 2.0 bar absolute.

4. The process according to any one of claims 1 to 3, **characterized in that** during process step a) the reaction time is between 30 minutes and 5 hours.

5. The process according to at least one of claims 1 to 4, **characterized in that** during process step a) and/or b) the additives dilute hydrofluoric acid or CsOH are used.

6. The process according to at least one of claims 1 to 5, **characterized in that** the molar ratio of additive to AlF₃ is between 0.008:1 and 0.11:1.

7. The process according to at least one of claims 1 to 6, **characterized in that** during process step c) the pressure is reduced to values of between 20 and 40 mbar absolute.

8. The process according to at least one of claims 1 to 7, **characterized in that** during process step c) the time during which the water is evaporated to obtain the solid is between 15 and 30 minutes.

9. The process according to at least one of claims 1 to 8, **characterized in that** during process step d) the temperature is between 100 and 180°C.

10. The process according to at least one of claims 1 to 9, **characterized in that** the pressure is between 20 and 100 mbar during process step d).

11. The process according to at least one of claims 1 to 10, **characterized in that** during process step d) instead of a vacuum, carrier gas may be used to carry away the moisture, the process is performed in a single reactor, preferably in a vacuum mixing dryer.

## Revendications

1. Procédé de fabrication d'un fondant sur la base d'un complexe CsAIF amorphe avec une plage de fusion du complexe entre 415 et 480 °C, qui est **caractérisé par** des étapes de procédé suivantes :
a) liaison du fluorure de césium dissous dans de l'eau au fluorure d'aluminium présent en tant que solide et de réglage de l'amorphicité en ajoutant des composés acides ou alcalins en tant qu'additifs, la durée de réaction étant comprise entre 15 minutes et 6 heures pendant l'étape de procédé a) ;
b) réglage de la basicité ou de l'acidité dans le produit final en ajoutant des composés acides ou alcalins en tant qu'additifs, la température étant réglée dans l'absolu entre 95 et 175 °C et la pression étant réglée dans l'absolu entre 0,4 et 2,5 bar pendant les étapes de procédé a) et b), dans lequel, pendant l'étape de procédé a) et/ou b), les additifs CsHCO₃, Cs₂CO₃, CsOH, de l'acide fluorhydrique ou du bifluorure de césium dilués sont utilisés et le rapport molaire entre l'additif et AIF₃ est compris entre 0,0001:1 et 0,3:1 ;
c) application d'un vide de 10 à 100 mbar à la fin de la réaction pour évaporer l'eau présente dans le réacteur entre 5 minutes et une heure, la suspension de réaction étant transformée en un solide pendant l'étape de procédé c) ;
d) déshydratation du produit à des températures entre 80 et 300 °C et à un vide de 10 et 900 mbar, des humidités résiduelles inférieures à 0,1 % étant atteintes pendant l'étape de procédé d),
dans lequel le procédé est réalisé exclusivement dans un sécheur-mélangeur sous vide.

2. Procédé selon la revendication 1, **caractérisé en ce que** pendant les étapes de procédé a) et b), la température est comprise entre 105 et 150 °C.

3. Procédé selon la revendication 1 ou 2, **caractérisé en ce que** pendant l'étape de procédé a) et b), la pression est comprise dans l'absolu entre 0,9 et 2,0 bar.

4. Procédé selon l'une quelconque des revendications 1 à 3, **caractérisé en ce que** pendant l'étape de procédé a), la durée de réaction est comprise entre 30 minutes et 5 heures.

5. Procédé selon au moins l'une quelconque des revendications 1 à 4, **caractérisé en ce que** pendant l'étape de procédé a) et/ou b), les additifs, de l'acide fluorhydrique ou du CsOH dilués sont utilisés.

6. Procédé selon au moins l'une quelconque des revendications 1 à 5, **caractérisé en ce que** le rapport molaire entre l'additif et AIF₃ est compris entre 0,008:1 et 0,11:1.

7. Procédé selon au moins l'une quelconque des revendications 1 à 6, **caractérisé en ce que** pendant l'étape de procédé c), la pression est abaissée dans l'absolu sur des valeurs entre 20 et 40 mbar.

8. Procédé selon au moins l'une quelconque des revendications 1 à 7, **caractérisé en ce que** pendant l'étape de procédé c), la durée, pendant laquelle l'eau est évaporée pour obtenir le solide, est comprise entre 15 et 30 minutes.

9. Procédé selon au moins l'une quelconque des revendications 1 à 8, **caractérisé en ce que** pendant l'étape de procédé d), la température est comprise entre 100 et 180 °C.

10. Procédé selon au moins l'une quelconque des revendications 1 à 9, **caractérisé en ce que** pendant l'étape de procédé d), la pression est comprise entre 20 et 100 mbar.

11. Procédé selon au moins l'une quelconque des revendications 1 à 10, **caractérisé en ce que** pendant l'étape de procédé d), du gaz porteur peut être utilisé pour évacuer l'humidité en lieu et place du vide,
le procédé est réalisé exclusivement dans un seul et même réacteur, de manière préférée dans un sécheur-mélangeur sous vide.
